# EUROPÄISCHE PATENTSCHRIFT

(11) **EP 3 073 679 B1**
(45) Veröffentlichungstag und Bekanntmachung des Hinweises auf die Patenterteilung: **07.05.2025**
(21) Anmeldenummer: 16000554.2
(22) Anmeldetag: 12.03.2008
(51) Int. Cl.: H04L 12/46, H04L 47/10, H04L 47/125, H04L 47/41, H04L 47/193, H04L 47/34

(54) **SENDE- UND EMPFANGSHILFSVORRICHTUNGEN UND SENDE- UND EMPFANGSVERFAHREN FÜR DAS ÜBERMITTELN EINES DATENSTROMS ÜBER GEBÜNDELTE NETZWERKZUGANGSLEITUNGEN**
TRANSMISSION AND RECEPTION AID DEVICE AND TRANSMISSION AND RECEPTION METHOD FOR TRANSMITTING A DATA STREAM OVER BUNDLED NETWORK ACCESS CABLES
DISPOSITIFS D'AIDE A L'EMISSION ET LA RECEPTION ET PROCEDES D'EMISSION ET DE RECEPTION CORRESPONDANTS DE TRANSMISSION D'UN FLUX DE DONNEES PAR DES FAISCEAUX DE LIGNES D'ACCES AU RESEAU

(30) Priorität: 12.03.2007 DE 102007012143
(43) Veröffentlichungstag der Anmeldung: 28.09.2016
(62) Teilanmeldung aus: 08004659.2
(73) Patentinhaber: Viprinet Europe GmbH, 55411 Bingen am Rhein (DE)
(72) Erfinder: Kissel, Simon, 55411 Bingen am Rhein (DE)
(74) Vertreter: Grosse Schumacher Knauer von Hirschhausen

(56) Entgegenhaltungen:
- FR-A1- 2 884 997
- US-A1- 2002 010 866
- US-A1- 2003 235 206
- US-A1- 2005 063 303
- US-B1- 7 184 402
- SKLOWER UNIVERSITY OF CALIFORNIA K ET AL: "The PPP Multilink Protocol (MP); rfc1990.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 August 1996 (1996-08-01), XP015007774, ISSN: 0000-0003

## Beschreibung

### TECHNISCHES GEBIET

Die Erfindung betrifft eine Anordnung und ein Verfahren zum Ubermitteln eines Datenstroms über gebündelte Netzwerkzugangsleitungen sowie eine Sende- und eine Empfangshilfsvorrichtung und ein Sende- und ein Empfangsverfahren dafür.

### TECHNISCHER HINTERGRUND

Zum Übermitteln eines Datenstroms von einer Sendevorrichtung an eine Empfangsvorrichtung über ein Netzwerk mit paketbasiertem Übertragungsprotokoll, insbesondere über das TCP/IP-basierte Internet, werden zur Anbindung der Sendevorrichtung sowie der Empfangsvorrichtung üblicherweise Netzwerkzugangsleitungen in Form von ISDN-Leitungen, WLAN-Funkverbindungen, Telefonleitungen oder dergleichen verwendet. Die Sendevorrichtung unterteilt den Datenstrom in nummerierte aufeinander folgende Datenpakete und sendet diese nacheinander über die Netzwerkzugangsleitung an das Netzwerk. Im Netzwerk werden die Datenpakete in Richtung auf die Empfangsvorrichtung übertragen, wo sie über die empfangsvorrichtungsseitige Netzwerkzugangsleitung aus dem Netzwerk entnommen und der Empfangsvorrichtung zugeführt werden. Dort werden die Datenpakete wieder aneinander gereiht, um den gesendeten Datenstrom zu erhalten.

Die Datenprotokolle, die sich für eine derartige Übermittlung eines Datenstroms in der Praxis durchgesetzt haben, insbesondere das auf das Internetprotokoll (IP) aufsetzende Transport Connection Protocol (TCP), berücksichtigen grundsätzlich die Möglichkeit des Verlusts von Datenpaketen im Netzwerk. Daher obliegt es der Empfangsvorrichtung, nicht eingetroffene Datenpakete bei der Sendevorrichtung erneut anzufordern und der Sendevorrichtung den Empfang von Datenpaketen zu quittieren. Ein Verlust von Datenpaketen wird angenommen, wenn aufeinander folgend an der Empfangsvorrichtung eintreffende Datenpakete nicht aufeinander folgend nummeriert sind. Trifft beispielsweise ein Datenpaket mit der Nummer 5 nach einem Datenpaket mit der Nummer 2 ein, wird angenommen, dass die Datenpakete Nr. 3 und 4 im Netzwerk verloren gegangen sind. Diese Datenpakete werden daher von der Empfangsvorrichtung nach Empfang des Datenpakets Nr. 5 erneut bei der Sendevorrichtung angefordert. Damit ist sichergestellt, dass der komplette Datenstrom übertragen wird.

Diese Eigenart der verwendeten Übertragungsprotokolle führt jedoch zu Problemen, wenn eine Sendevorrichtung (oder eine Empfangsvorrichtung) gleichzeitig über mehrere Netzwerkzugangsleitungen an das Netzwerk angebunden werden soll, um die Nutzbandbreite und die Verfügbarkeit zu erhöhen. Die Zugangsleitungen werden in diesem Fall "gebündelt", d.h. aus Sicht der Sendevorrichtung zu einer einzigen virtuellen Leitung vereint.

Die Datenpakete werden dann auf die mehreren Netzwerkzugangsleitungen verteilt, um die Netzwerkzugangsleitungen gleichzeitig zu nutzen. Sofem die gebündelten Netzwerkzugangsleitungen hinsichtlich Bandbreite und Laufzeit pro Datenpaket identisch sind und zudem mit einem synchronen Taktgeber arbeiten, wie dies beispielsweise bei der sogenannten ISDN-Kanalbündelung der Fall ist, kann die Reihenfolge, in der die Datenpakete an der Empfangsvorrichtung eintreffen, nahezu genauso gut gesteuert werden, wie bei der Verwendung einer einzigen Netzwerkzugangsleitung.

Unterscheiden sich die gebündelten Netzwerkzugangsleitungen jedoch hinsichtlich Bandbreite und/oder Laufzeit und/oder wird kein synchroner Taktgeber verwendet, kann nicht sichergestellt werden, dass die Datenpakete in der richtigen Reihenfolge an der Empfangsvorrichtung eintreffen.

Werden beispielsweise eine Netzwerkzugangsleitung mit einer Laufzeit pro Datenpaket mit 100ms und eine weitere Netzwerkzugangsleitung mit einer Laufzeit pro Datenpaket von 250ms gebündelt, treffen die über die erste Datenleitung übermittelten Datenpakete stets schneller an der Empfangsvorrichtung ein als die über die zweite Netzwerkzugangsleitung übermittelten. Wird der Datenstrom an der Sendevorrichtung beispielsweise derart auf die beiden Netzwerkzugangsleitungen verteilt, dass das erste Datenpaket über die erste Netzwerkzugangsleitung versendet wird, das zweite Datenpaket über die zweite Netzwerkzugangsleitung versendet wird, das dritte Paket über die erste Netzwerkzugangsleitung versendet wird, das vierte Paket über die zweite Netzwerkzugangsleitung versendet wird usw., treffen die Datenpakete bedingt durch die Laufzeitunterschiede an der Empfangsvorrichtung wie folgt ein:
Nach 100ms: Das erste Datenpaket trifft über die Netzwerkzugangsleitung 1 ein.
Nach 200ms: Das dritte Datenpaket trifft über die Netzwerkzugangsleitung 1 ein.
Nach 250ms: Das zweite Datenpaket trifft über die Netzwerkzugangsleitung 2 ein.
Nach 300ms: Das fünfte Datenpaket trifft über die Netzwerkzugangsleitung 1 ein.
Nach 400ms: Das siebte Datenpaket trifft über die Netzwerkzugangsleitung 1 ein.
usw.

Durch die unterschiedlichen Laufzeiten auf den beiden Netzwerkzugangsleitungen werden Datenpakete auf der ersten Netzwerkzugangsleitung also Pakete auf der zweiten Netzwerkzugangsleitung überholen. Die Datenpakete treffen an der Empfangsvorrichtung folglich in falscher Reihenfolge ein. Die falsche Reihenfolge führt zu einer erheblichen Anzahl von erneut angeforderten Datenpaketen. Zudem reagiert die Sendevorrichtung auf derartige Neuanforderungen bzw. auf das Ausbleiben von Empfangsbestätigungen mit einer Drosselung der Datensenderate.

In der Praxis werden die Laufzeiten der Netzwerkzugangsleitungen zudem variieren, so dass die Reihenfolge des Datenpaketempfangs nicht vorhersagbar ist. Dies ist selbst dann der Fall, wenn die theoretische Laufzeit der Datenpakete auf den Netzwerkzugangsleitungen nahezu übereinstimmen sollte, jedoch die Bandbreiten der gebündelten Netzwerkzugangsleitungen nicht übereinstimmen. Dies liegt darin begründet, dass die verfügbare Bandbreite bedingt durch Zwischenpuffer je nach Auslastung die tatsächliche Laufzeit eines Datenpakets beeinflusst. So werden in der Praxis heutige Internetzugangs-Breitbandleitungen, z.B. DSL, als sogenanntes "shared medium" realisiert, bei dem sich mehrere Teilnehmer eines Ortsnetzes die verfügbare Bandbreite im Verteilernetz teilen. Dies sorgt für ständig schwankende Leitungseigenschaften im Bezug auf Bandbreite und damit Laufzeit, wodurch das Verteilen von Datenpaketen auf mehrere Netzwerkzugangsleitungen zwangsläufig zu falsch sortierten Datenpaketen bei der Empfangsvorrichtung führt.

Daher führt das Zuschalten einer zweiten Netzwerkzugangsleitung mit gleicher Bandbreite in der Praxis nicht zu der theoretischen Verdoppelung der Nutzbandbreite. Stattdessen findet überhaupt keine oder nur eine sehr geringe Erhöhung der Nutzbandbreite statt. Oft treten sogar Störungen und deutliche Verzögerungen beim Datentransfer auf, bedingt durch die Vielzahl von Datenpaket-Neuanforderungen und die Drosselung der Datensenderate.

Der naheliegende Ansatz, die Datenpakete bei der Empfangsvorrichtung anhand der jeweiligen Sequenznummer neu zu sortieren, ist nicht praktikabel. Da das IP-Protokoll keine Zustellgarantie abgibt, Datenpakete also verloren gehen können, würde ein solcher Ansatz mit der Erkennung von Datenpaketverlusten kollidieren. Trifft nach dem ersten Datenpaket beim Empfänger zunächst das dritte statt dem zweiten Datenpaket ein, ist es für die Empfangsvorrichtung unmöglich festzustellen, ob dies geschehen ist, weil das dritte Datenpaket das zweite überholt hat, d.h. ein "packet reordering" auf dem Transportweg stattfand, oder aber ob das zweite Datenpaket unterwegs verloren gegangen ist und daher nicht ohne entsprechende Neuanforderung eintreffen wird.

Daher gibt es im Stand der Technik lediglich zwei praktikable Ansätze zum Bündeln mehrerer Netzwerkzugangsleitungen.

Beim ersten Ansatz werden nur Netzwerkzugangsleitungen gebündelt, die exakt gleiche Eigenschaften im Bezug auf Bandbreite und Laufzeit haben. Die gebündelten Netzwerkzugangsleitungen arbeiten dabei mit einem synchronen Taktgeber. Dies ist z.B. bei der ISDN-Kanalbündelung der Fall. Hierdurch wird sichergestellt, dass die Datenpakete tatsächlich in der richtigen Reihenfolge bei der Empfangsvorrichtung eintreffen.

Im zweiten Ansatz werden zwar unterschiedliche Netzwerkzugangsleitungen gebündelt, allerdings wird pro zu übertragendem Datenstrom nur eine der gebündelten Netzwertzugangsleitungen verwendet. n zur Verfügung stehende Leitungen können daher nur dann voll ausgenutzt werden, wenn mindestens n gleichzeitig voneinander unabhängige Datenströme existieren und die Anzahl von Datenströmen ohne Rest durch die Anzahl der Netzwerkzugangsleitungen teilbar ist.

Aus US 2002/010866 A1 ist eine Anordnung zum Übermitteln eines Datenstroms von einer Sendevorrichtung an eine Empfangsvorrichtung über Internet bekannt, wobei die Sendevorrichtung über Netzwerkzugangsleitungen an das Netzwerk angebunden sind und sende- und/oder empfangsvorrichtungsseitig mehrere Netzwerkzugangsleitungen zur Bündelung vorgesehen sind. Ein zwischen Sendevorrichtung und Netzwerkzugangsleitung(en) zwischengeschalteter Initiator ist zum Einkapseln von der Sendevorrichtung gesendeten Datenpaketen des Datenstroms und Übertragen der gekapselten Datenpakete über die Netzwerkzugangsleitung(en) an das Netzwerk ausgestaltet, und ein zwischen Netzwerkzugangsleitung(en) und Empfangsvorrichtung zwischengeschalteter Responder ist zum Empfangen und Entkapseln der gekapselten Datenpakete und zum Weiterleiten der entkapselten Datenpakete an die Empfangsvorrichtung ausgestaltet.

Aus der FR 2 884 997 A1 ist eine Anordnung zur Bündelung von Netzwerkzugangsleitungen bekannt, bei der verschiedene IP-Tunnel zwischen einer lokalen Endbenutzervorrichtung und einer entfernten Vorrichtung gebündelt werden.

Das RFC 1990 betrifft das PPP Multi-link Protokoll zur Koordination von mehreren Links, auch von asynchronen mit synchronen Links.

### AUFGABE

Ausgehend hiervon liegt der Erfindung die Aufgabe zugrunde, eine Anordnung und ein Verfahren zum Übermitteln eines Datenstroms über gebündelte Netzwerkzu gangsleitungen sowie eine Sende- und eine Empfangshilfsvorrichtung und ein Sende- und ein Empfangsverfahren dafür zu schaffen, die eine Bündelung von Netzwerkzugangsleitungen mit einer entsprechenden Erhöhung der Nutzbandbreite ermöglichen.

Diese Aufgabe wird entsprechend den Merkmalen der Ansprüche 1, 3, 8, 12, 18 bzw. 21 gelöst.

### KURZBESCHREIBUNG DER ERFINDUNG

Hierdurch werden Vorrichtungen und Verfahren geschaffen, mit denen eine asynchrone Bündelung von Netzwerkzugangsleitungen zur Nutzung mit dem InternetProtokoll möglich wird.

Erfindungsgemäß ist es möglich, eine beliebige Anzahl höchst unterschiedlicher Netzwerkzugangsleitungen zu bündeln. Durch die Kombination unterschiedlicher physikalischer Leitungsarten sinkt das Ausfallrisiko der Gesamtanbindung, da anders als bei der synchronen Bündelung ein Ausfall meist nur eine Leitungsart betrifft. Fällt eine der gebündelten Netzwerkzugangsleitungen aus, z.B. weil der Provider die DSL-Verbindung alle 24 Stunden zurücksetzt oder trennt, bleiben alle TCP/IP-Verbindungen erhalten, solange wenigstens eine weitere der gebündelten Netzwerkzugangsleitungen noch funktionsfähig ist; Software wie etwa Skype muss erfindungsgemäß keine neue Verbindung herstellen und erneut Parameter verhandeln, so dass effektiv eine Standleitung erhalten wird.

Durch die erfindungsgemäße Bündelung kann die Gesamtbandbreite von Internetanbindungen in beliebigen Schritten erhöht werden. Die Gesamtverfügbarkeit steigt nahezu exponentiell mit der Anzahl der Netzwerkzugangsleitungen. So ergibt die Kombination von zwei unabhängigen Netzwerkzugangsleitungen mit einer Verfügbarkeit von jeweils 98% eine Gesamtverfügbarkeit von 99,96 %.

Erfindungsgemäß erfolgt eine Bündelung von Netzwerkzugangsleitungen innerhalb beliebiger physikalischer Teilstrecken einer TCP/IP-Ende-zu-Ende-Verbindung ohne Anpassung und Wissen der beteiligten Kommunikations-Endpunkte. Die Teilstrecke kann sich zwischen zwei Computern erstrecken, die sich jeweils über DSL oder dergleichen mit dem Netzwerk verbinden, oder zwischen einem Computer, der sich über eine derartige Verbindung mit dem Netzwerk verbindet und einem Internetknotenpunkt, z.B. beim Internet-Backbone, oder zwischen zwei Teilabschnitten im Internet, z.B. zwei Verteilerknoten, oder zwischen zwei Netzwerken, usw.

Das TCP/IP-Protokoll ist Ende-zu-Ende-basiert, d.h. die Endpunkte einer Verbindung müssen sich selbständig gegenseitig über den Empfang oder das Fehlen eines Datenpakets informieren. Die erfindungsgemäßen Verfahren und Vorrichtungen agieren daher "unsichtbar" für die Endpunkte. So erhält der Sende-Endpunkt weiterhin Empfangsbestätigungen, und zwar von der Sendehilfsvorrichtung im Namen des Empfangs-Endpunktes, der seinerseits den Eingang von Datenpaketen eines Datenstroms in korrekter Reihenfolge erwartet.

Erfindungsgemäß wird also die TCP-Ebene vollständig vom Transportverhalten der gebündelten Netzwerkzugangsleitungen entkoppelt. Eine gegenseitige Beeinflussung wird damit ausgeschlossen. Dies wird dadurch erreicht, dass den Endpunkten eine virtuelle Realität simuliert wird. Hierzu tritt ein "man in the middle" in Form einer Sendehilfsvorrichtung und einer Empfangshilfsvorrichtung, die physikalisch als Steckkarte oder Router oder dergleichen oder auch als Softwareschicht ausgestaltet sein können, beiden Seiten gegenüber unter der Identität der jeweils anderen Seite auf. Den TCP-Endpunkten wird auf diesem Wege ein simuliertes Bild über das Transportverhalten auf den Netzwerkzugangsleitungen vermittelt. Vorzugsweise erhalten sie die in den Datenstrom eingeschleuste Information, dass alle versendeten Datenpakete einer bestehenden Verbindung sofort vom Empfangs-Endpunkt bestätigt worden seien, und somit mit voller Geschwindigkeit weitergesendet werden darf.

Empfangsendpunktseitig werden alle von den gebündelten Netzwerkzugangsleitungen kommenden Datenpakete erfindungsgemäß zwischengespeichert und korrekt sortiert. Für den Sende-Endpunkt ist diese Verzögerung irrelevant, da ihm gegenüber bereits der Empfang aller Datenpakete vorab bestätigt worden ist, so dass der sofortige Versand weiterer Datenpakete möglich ist. Alle möglicherweise dazu in Widerspruch stehenden echten Bestätigungspakete vom Empfangs-Endpunkt können erfindungsgemäß herausgefiltert werden.

Da die TCP-Endpunkte keine Informationen über den Zustand der Transportsituation erhalten, weil sie vom tatsächliche Transport durch das Netzwerk durch die Sendehilfsvorrichtung und die Empfangshilfsvorrichtung vollständig entkoppelt sind, obliegt die Verantwortung für die Verwaltung der Datenübertragung den Hilfsvorrichtungen.

Zu diesem Zweck wird zwischen den Hilfsvorrichtungen ein eigenes Transportprotokoll verwendet, welches auf die Verteilung von Datenpaketen und auf die Sortierung von Datenpaketen ausgelegt ist. Dadurch, dass dieses Protokoll von der TCP/IP-Schicht vollständig entkoppelt ist, entsteht eine Wahlfreiheit: Der Transport zwischen den Hilfsvorrichtungen kann mit beliebigen geeigneten Protokollen erfolgen. Zweckmäßig ist eine verschlüsselte VPN-Verbinung auf Basis des SSL/TLS-Verfahrens. Hierdurch entsteht ein sogenannter "Tunnel". Datenpakete, die von außerhalb kommend über die gebündelten Netzwerkzugangsleitungen transportiert werden sollen, werden in ein verschlüsseltes Containerpaket eingekapselt, in welchem sie übertragen werden.

Dabei wird der eingehende Datenstrom vorzugsweise auf eine Anzahl von Datenströmen verteilt, die der Anzahl von im jeweiligen Zeitpunkt aktiven, d.h. zweckmäßigerweise mit ausreichender Übertragungsrate sendefähigen, Netzwerkzugangsleitungen an der Sendehilfsvorrichtung entspricht. Wie die Datenpakete des eingehenden Datenstroms auf die ausgehenden Datenströme verteilt werden, kann zweckmäßigerweise in Abhängigkeit der Auslastung der entsprechenden Netzwerkzugangsleitungen kontinuierlich neu bestimmt werden.

Weitere Ausgestaltungen, Merkmale und Vorteile der Erfindung ergeben sich aus den beigefügten Zeichnungen, den Ansprüchen und der nachfolgenden Beschreibung.

### FIGURENBESCHREIBUNG

Fig. 1 illustriert eine Ausführungsform der erfindungsgemäßen Anordnung.
Fig. 2 illustriert Datenströme mit Datenpaketen.
Fig. 3 illustriert eine Ausführungsform des erfindungsgemäßen Verfahrens.
Fig. 4 illustriert eine Ausführungsform der erfindungsgemäßen Sendehilfsvorrichtung.

### BESCHREIBUNG DER BEVORZUGTEN AUSFÜHRUNGSFORMEN

### A. Erfindungsgemäße Anordnung

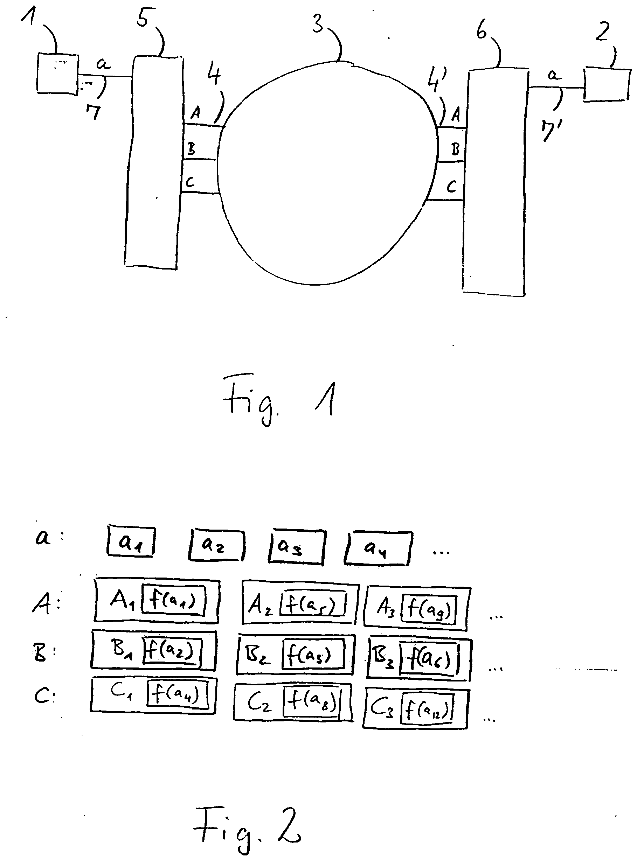

Die in Figur 1 dargestellte Anordnung zum Übermitteln eines Datenstroms a von einer Sendevorrichtung 1, z.B. einem Computer in einer Filiale einer Firma, an eine Empfangsvorrichtung 2, z.B. einen Computer in der Zentrale der Firma, über ein paketbasiertes Netzwerk 3, insbesondere das Internet, welches über paarweise mit Ende-zu-Ende-Verbindungen gekoppelte physikalische Netzwerkzugangsleitungen 4, 4', wie etwa DSL-Leitungen, WLAN-Verbindungen, Telefonleitungen, UMTS-Verbindungen u.dgl. drahtgebunden und drahtlos angebunden ist, umfasst eine Sendehilfsvorrichtung 5 und eine Empfangshilfsvorrichtung 6.

Die Sendevorrichtung 1 liefert einen Datenstrom a in Form von Datenpaketen aᵢ, i=1, 2, 3 ... entsprechend einem standardisiertem Protokoll, insbesondere entsprechend dem TCP/IP-Protokoll, vgl. Fig. 2. Der Datenstrom a ist an die Empfangsvorrichtung 2 adressiert. Insofern werden die Sendevorrichtung 1 und die Empfangsvorrichtung 2 mit einer Ende-zu-Ende-Verbindung nach TCP/IP-Standard verbunden, die zwischen der IP-Adresse der Sendevorrichtung 1 und der IP-Adresse der Empfangsvorrichtung 2 gebildet wird.

Der Datenstrom a gelangt über eine drahtgebundene oder drahtlose Verbindung 7 zur Sendehilfsvorrichtung 5. Dort werden die Datenpakete aᵢ aufgeteilt, gegebenenfalls als f(aᵢ) mit einer Funktion f verschlüsselt und in Datenpakete Ai, Bi, Ci, i=1,2,3,... gekapselt.

Anschließend werden die Datenpakete Aᵢ, Bᵢ, Cᵢ über die Netzwerkzugangsleitungen 4 dem Netzwerk 3 zugeführt, und zwar für die Sendevorrichtung 1 unsichtbar als Datenströme A, B, C. Im Netzwerk 3, das das Internet oder ein beliebiges anderes Netzwerk mit beliebigem Protokoll sein kann, werden die Datenpakete Aᵢ, Bᵢ, Cᵢ entsprechend dem jeweiligen Protokoll, hier beispielhaft dem TCP/IP-Protokoll, in Richtung auf die Empfangsvorrichtung 6 übertragen, und zwar zweckmäßigerweise zu jeweils einer bestimmten Netzwerkzugangsleitung 4'. Hierzu ist jeder Netzwerkzugangsleitung 4, 4' jeweils eine eindeutige IP-Adresse zugeordnet, und die sechs Netzwerkzugangsleitungen 4, 4' sind in der dargestellten Ausführungsform unter Bildung von drei Ende-zu-Ende-Verbindungen paarweise gekoppelt, so dass drei unabhängige Übertragungskanäle zwischen der Sendehilfsvorrichtung 5 und der Empfangshilfsvorrichtung 6 gebildet werden, jeweils einer für jeden der drei Datenströme A, B, C.

Die Datenpakete Aᵢ, Bᵢ, Cᵢ verlassen das Netzwerk 3 über die dem jeweiligen Datenstrom zugeordneten Netzwerkzugangsleitungen 4' und gelangen in die Empfangshilfsvorrichtung 6. Dort werden sie zwischengespeichert. Anschließend werden die Datenpakete f(aᵢ) entkapselt, entschlüsselt und sortiert. Schließlich werden sie in der richtigen Reihenfolge über eine Leitung 7' gemäß TCP/IP-Protokoll der Empfangsvorrichtung 2 zugeführt.

Die Sendevorrichtung 1 und die Empfangsvorrichtung 2 sind dabei vollständig von der Verwaltung der Netzwerkzugangsleitungen 4, 4' und der Verarbeitung und Verwaltung der Datenpakete Aᵢ, Bᵢ, Cᵢ entkoppelt. Aus Sicht der Sendevorrichtung 1 existiert lediglich die Leitung 7, während aus Sicht der Empfangsvorrichtung 2 lediglich die Leitung 7' existiert, und sowohl die Sendevorrichtung 1 als auch die Empfangsvorrichtung 2 sehen nur die sie verbindende Ende-zu-Ende-Verbindung, nicht jedoch die Ende-zu-Ende-Verbindungen zwischen den Netzwerkzugangsleitungen 4, 4'.

In anderen Ausführungsformen befindet sich die Empfangshilfsvorrichtung 6 nicht im Netz der Empfangsvorrichtung 2. Sie kann beispielsweise bei einem Serviceprovider angeordnet sein. Die Leitung 7' stellt dann eine serviceproviderseitige und ausreichend schnelle Verbindung zum Internet oder zu einem anderen Netz dar, in dem die Empfangsvorrichtung sich befindet. Gleiches gilt auch für die Sendehilfsvorrichtung 2; auch hier kann die Sendevorrichtung 1 in einem anderen Netz angeordnet sein. Der Abschnitt zwischen Sendehilfsvorrichtung 5 und Empfangshilfsvorrichtung 6 kann somit ein beliebiger Abschnitt einer Ende-zu-Ende-Verbindung zwischen einer Sendevorrichtung 1 und einer Empfangsvorrichtung 2 sein.

In einer besonders bevorzugten Ausführungsform ist die Empfangshilfsvorrichtung 6 quasi Teil des Intemetbackbone, d.h. sie kann z.B. bei einem Netzwerkprovider direkt mit einem Internetknoten verbunden sein. In diesem Fall ist nur eine Netzwerkzugangsleitung 4' erforderlich, die zweckmäßigerweise als Standleitung oder Dauerverbindung beispielsweise in Form eines für einen ausreichenden Datendurchsatz dimensionierten Kabels ausgestaltet ist. Der Empfangshilfsvorrichtung 6 kann, muss abekeine IP-Adresse als solche zugewiesen sein; vielmehr können in diesem Fall grundsätzlich alle Daten von einem oder mehreren oder allen Kunden des Netzwerkproviders automatisch zunächst zur Empfangshilfsvorrichtung 6 geleitet werden, die sie weiterverarbeitet und dann im Netzwerk 3 entsprechend verteilt.

Gegebenenfalls sind bereits in den Verteilerstellen des Netzwerks 3 Empfangshilfsvorrichtungen 6 vorgesehen. Bei diesen Ausführungsformen ist die Ausgestaltung der Empfangshilfsvorrichtung 6 als Softwareschicht, die in einem Server oder Netzwerkdienstcomputer oder dergleichen läuft, besonders vorteilhaft.

Die Anzahl der Netzwerkzugangsleitungen 4, 4' ist entsprechend den Anforderungen frei skalierbar. So können insbesondere zwei oder mehr als drei Netzwerkzugangsleitungen 4, 4' vorgesehen sein. Ferner ist es möglich, entweder die Sendehilfsvorrichtung 5 oder die Empfangshilfsvorrichtung 6 mit nur einer Netzwerkzugangsleitung 4, 4' an das Netzwerk 3 anzukoppeln. Schließlich kann sich die Anzahl der Netzwerkzugangsleitungen 4 von der Anzahl der Netzwerkzugangsleitungen 4' unterscheiden. So kann z.B. die Anzahl der Netzwerkzugangsleitungen 4 eins, zwei, drei oder vier betragen und die Anzahl der Netzwerkzugangsleitung 4' kann zwei oder drei oder vier, eins oder drei oder vier, eins oder zwei oder vier bzw. eins oder zwei oder drei betragen.

Grundsätzlich sollten die Netzwerkzugangsleitung(en) 4' mindestens den Datendurchsatz aller Netzwerkzugangsleitungen 4 aufnehmen können. Da die Netzwerkzugangsleitungen 4 in der Regel datendurchsatzbegrenzte Einwahlverbindungen wie DSL- oder UMTS-Verbindungen von Computern an dezentralen Orten sind, kann eine einzige Netzwerkzugangsleitung 4' in Form eines Gigabyte-LAN oder einer Ankopplung an ein Internetbackbone ausreichen.

Die Rollen der Sendevorrichtung 1 und der Empfangsvorrichtung 2 sind tauschbar, d.h. eine Datenübertragung kann auch in die entgegengesetzte Richtung erfolgen. Insbesondere kann die Sendehilfsvorrichtung 5 auch einen Datenstrom in die entgegengesetzte Richtung handhaben, also empfangen. Gleiches gilt für die Empfangshilfsvorrichtung 6, die auch einen Datenstrom senden kann. Dadurch wird eine bidirektionale Verbdingung über gebündelte Datenzugangsleitungen 4 und/oder 4' möglich.

### B. Erfindungsgemäßes Verfahren

Das erfindungsgemäße Verfahren wird nachfolgend rein beispielhaft anhand des TCP/IP-Protokolls in einer bevorzugten Ausführungsform erläutert.

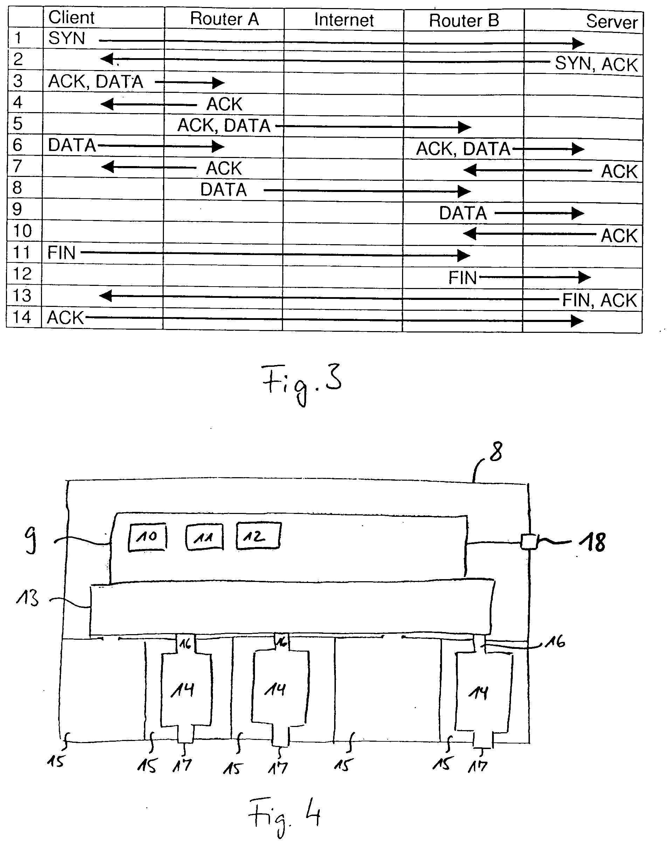

Die Datenübertragung zwischen Sendevorrichtung 1 und Empfangsvorrichtung 2 wird unter Bezugnahme auf Fig. 3 illustriert, in der die aus dem TCP/IP-Protokoll stammenden Bezeichnungen "SYN", "ACK" und "FIN" Pakete zum Verbindungsaufbau, zur Empfangsbestätigung bzw. zum Verbindungsabbau bezeichnen und die Sendevorrichtung 1 als Client, die Sendehilfsvorrichtung 5 als Router A, das Netzwerk 3 als Internet, die Sendehilfsvorrichtung 6 als Router B und die Empfangsvorrichtung 2 als Server bezeichnet sind.

Zum Aufbau einer Ende-zu-Ende-Verbindung zwischen Sendevorrichtung 1 und Empfangsvorrichtung 2 sendet die Sendevorrichtung 1 ein SYN-Paket an die Empfangsvorrichtung 2 (Zeile 1 in Fig. 3). Da die die Empfangsvorrichtung 2 simulierende Sendehilfsvorrichtung 5 zu diesem Zeitpunkt noch nicht wissen kann, ob die Empfangsvorrichtung 2 erreichbar ist und dem Verbindungsaufbau zustimmen wird, wird für die zum Verbindungsaufbau nötigen Datenpakete keine Empfangsbestätigung simuliert und auch keine Zwischenspeicherung durchgeführt. Die Datenpakete werden unbestätigt in der Sendehilfsvorrichtung 5 verschlüsselt und gekapselt und über eine beliebige der daran angeschlossenen Netzwerkzugangsleitungen 4, das Netzwerk 3 und die Netzwerkzugangsleitungen 4' an die Empfangshilfsvorrichtung 6 weitergeleitet, welche wiederum das entkapselte und entschlüsselte Datenpaket an die Empfangsvorrichtung 2 weiterleitet.

Stimmt die Empfangsvorrichtung 2 dem Verbindungsaufbau zu, sendet sie ein ACK-Paket zurück (Zeile 2 in Fig. 3), welches wie das SYN-Paket von der Empfangshilfsvorrichtung 6 und der Sendehilfsvorrichtung 5 unmittelbar an die Sendevorrichtung 1 zurückgeleitet wird.

Die Sendevorrichtung 1 bestätigt den Empfang des ACK-Pakets ihrerseits mit einem ACK-Paket (TCP Drei-Wege-Handshake). Die Ende-zu-Ende-Verbindung zwischen Sendevorrichtung 1 und Empfangsvorrichtung 2 ist damit aufgebaut. Zusammen mit dem ACK-Paket kann die Sendevorrichtung 1 bereits Daten übermitteln (Zeile 3 in Fig. 3).

An dieser Stelle wird nun eine in der Sendehilfsvorrichtung 5 integrierte Pufferung aktiviert. Das erhaltene Datenpaket aᵢ wird in der Sendehilfsvorrichtung 5 zwischengespeichert. Die Sendehilfsvorrichtung 5 erzeugt eine Empfangsbestätigung für das erhaltene Datenpaket aᵢ und sendet diese über die Leitung 7 an die Sendevorrichtung 1 (Zeile 4 in Fig. 3).

Anschließend (Zeile 5 in Fig. 3) wird das Datenpaket aᵢ in der Sendehilfsvorrichtung 5 als f(aᵢ) verschlüsselt und gekapselt und über das Netzwerk 3 zur Empfangshilfsvorrichtung 6 gesendet, die nunmehr ebenfalls ihre Pufferung aktiviert. Zu diesem Zeitpunkt sind die Versand- und Empfangspunkte des TCP/IP-Protokolls entkoppelt. Die Sendehilfsvorrichtung 5 kann das gekapselte Datenpaket daher über eine beliebige der Netzwerkzugangsleitungen 4 als Aᵢ, Bᵢ oder Cᵢ versenden und weitere folgende Datenpakete aᵢ nach Verschlüsselung und Kapselung wiederum auf andere Netzwerkzugangsleitungen 4 verteilen, so dass diese parallel übertragen werden, wobei zweckmäßigerweise die tatsächliche Bandbreite und Auslastung der Netzwerkzugangsleitungen 4 berücksichtigt wird, um die Übertragung zu optimieren. Die Datenpakete Aᵢ, Bᵢ, Cᵢ werden bei Ankunft in der Empfangshilfsvorrichtung 6 entkapselt, gegebenenfalls entschlüsselt und korrekt sortiert, so dass die Datenpakete aᵢ zurück erhalten werden.

Sobald Datenpakete aᵢ in der von der Empfangsvorrichtung 2 erwarteten Reihenfolge vorliegen, werden diese an die Empfangsvorrichtung 2 weitergeleitet (Zeile 6 in Fig. 3).

Die Empfangsvorrichtung 2 bestätigt den Erhalt dieser Datenpakete aᵢ mit einem ACK-Paket (Zeile 7 in Fig. 3). Das ACK-Paket wird über die Leitung 7' an die Empfangshilfsvorrichtung 6 geleitet. Da die Sendevorrichtung 1 bereits (Zeile 4 in Fig. 3) von der Sendehilfsvorrichtung 5 ein ACK-Paket für das Datenpaket aᵢ erhalten hat, braucht die Empfangshilfsvorrichtung 6 das von der Empfangsvorrichtung 2 kommende ACK-Paket nicht weiter zu bearbeiten, sondern kann dies gegebenenfalls nach interner Kenntnisnahme verwerfen.

Sobald die Sendevorrichtung 1 das ACK-Paket (Zeile 4 in Fig. 3) erhalten hat, sendet sie unverzüglich das nächste Datenpaket aᵢ₊₁ (Zeile 6 in Fig. 3), noch bevor das vorhergehende Datenpaket aᵢ tatsächlich bei der Empfangsvorrichtung 2 angekommen ist. Das erfindungsgemäße Verfahren stellt sicher, dass die Sendevorrichtung 1 ununterbrochen mit hoher Senderate weitere Datenpakete aᵢ verschicken kann. Zusätzlich zu dem Effekt, dass diese Entkopplung ein paralleles Übertragen der Daten über mehrere Netzwerkzugangsleitungen ermöglicht, wird damit die Übertragung beschleunigt und optimiert, da die Sendevorrichtung 1 keine Sendepause durch Warten auf Empfangsbestätigungen (ACK) einer möglicherweise weit entfernten Empfangsvorrichtung 2 einlegen muss. Die technischen Beschränkungen des TCP-Protokolls in Form der maximalen Menge an Daten, die ohne Erhalt einer Empfangsbestätigung versendet werden darf, wird als zusätzlicher Effekt umgangen.

Wenn alle Daten eines Datenstroms a in Form von Datenpaketen aᵢ durch die Sendevorrichtung 1 über die Leitung 7 an die Sendehilfsvorrichtung 5 übertragen worden sind, kann die Verbindung abgebaut werden. Hierzu wird ein FIN-Paket von der Sendevorrichtung 1 an die Sendehilfsvorrichtung 5 gesendet (Zeile 11 in Fig. 3).

Ein derartiges FIN-Paket wird so wie das SYN-Paket (Zeile 1 in Fig. 3) von der Sendehilfsvorrichtung 1 an die Empfangshilfsvorrichtung 6 weitergeleitet. Dort wird das FIN-Paket zwischengespeichert (Zeile 12 in Fig. 3).

Erst nachdem die Empfangshilfsvorrichtung 6 alle noch ausstehenden Datenpakete Aᵢ, Bᵢ, Cᵢ von der Sendehilfsvorrichtung 5 erhalten hat, und zweckmäßigerweise erst nachdem die Empfangsvorrichtung 2 alle noch in der Empfangshilfsvorrichtung 6 zwischengespeicherten, entkapselten und entschlüsselten Datenpakete aᵢ erhalten und bestätigt hat, wird das in der Empfangshilfsvorrichtung 6 zwischengespeicherte FIN-Paket an die Empfangsvorrichtung 2 weitergeleitet und die interne Paketpufferung für diese Verbindung wird deaktiviert.

Die Empfangsvorrichtung 2 bestätigt nunmehr das FIN-Paket mit einem FIN-ACK-Paket. Das FIN-ACK-Paket wird von der Empfangshilfsvorrichtung 6 wiederum ohne Verarbeitung und ohne simulierte Empfangsbestätigung über die Sendehilfsvorrichtung 6 zur Sendevorrichtung 1 geleitet (Zeile 13 in Fig. 3).

Die Sendevorrichtung 1 bestätigt den Erhalt mit einem ACK-Paket, welches unverarbeitet über die Sendehilfsvorrichtung 5 und die Empfangshilfsvorrichtung 6 an die Empfangsvorrichtung 2 weitergeleitet wird (Zeile 14 in Fig. 3).

Die Ende-zu-Ende-Verbindung zwischen der Sendevorrichtung 1 und der Empfangsvorrichtung 2 ist damit geschlossen.

Sowohl die Sendehilfsvorrichtung 5 als auch die Empfangsvorrichtung 6 sind, sobald die Pufferung aktiviert worden ist, in der Lage, Datenpakete aᵢ beliebig zwischenzuspeichem und neu zu sortieren. Dies ermöglicht es der Sendehilfsvorrichtung 5, von der Sendevorrichtung 1 eingehende Datenpakete aᵢ beliebig auf angeschlossene Netzwerkszugangsleitungen 4 zu verteilen. Hierdurch kommen die Datenpakete aᵢ zwar in falscher Reihenfolge bei der Empfangshilfsvorrichtung 6 an. Allerdings werden sie dort zwischengespeichert und neu sortiert, bis Datenpakete aᵢ in der von der Empfangsvorrichtung 2 erwarteten Reihenfolge zur Verfügung stehen. Erst dann werden die Datenpakete aᵢ an die Empfangsvorrichtung 2 weitergeleitet.

Somit wird die gebündelte Übertragung einzelner Datenströme a über mehrere Netzwerkszugangsleitungen 4 und/oder 4' möglich.

Sollte während der Übertragung zwischen der Sendehilfsvorrichtung 5 und der Empfangshilfsvorrichtung 6 eine der verwendeten Netzwerkzugangsleitungen 4, 4' zusammenbrechen, übermittelt die Sendehilfsvorrichtung 5 die verlorengegangen Datenpakete erneut über eine andere der Netzwerkzugangsleitungen 4 an die Empfangshilfsvorrichtung 6. Das zwischen der Sendehilfsvorrichtung 5 und der Empfangshilfsvorrichtung 6 dazu verwendete Protokoll ist austauschbar und wird hier nicht weiter beschrieben. Der Ausfall einer der gebündelten Netzwerkzugangsleitungen 4, 4' bewirkt damit keinen Abbruch der Ende-zu-Ende-Verbindung zwischen Sendehilfsvorrichtung 5 und Empfangshilfsvorrichtung 6, und zwischen Sendevorrichtung 1 und Empfangsvorrichtung 2, sofern zumindest eine Netzwerkzugangsleitung 4 und eine Netzwerkzugangsleitung 4' funktionsfähig bleibt.

### C. Sendehilfsvorrichtung

Nachfolgend wird unter Bezugnahme auf Fig. 3 eine Ausführungsform der Sendehilfsvorrichtung 5 beschrieben. Da Sendehilfsvorrichtung 5 bei umgekehrter Datenstromrichtung die Funktion der Empfangshilfsvorrichtung 6 übernehmen kann, und umgekehrt, gilt das nachfolgende auch für die Empfangshilfsvorrichtung 6; diese kann zudem identisch ausgestaltet sein.

Die dargestellte Sendehilfsvorrichtung 5 ist in Form eines Hardware-Routers implementiert. Sie umfasst ein Gehäuse 8, in dem eine Hauptplatine 9 mit einem Prozessor 10, Arbeitsspeicher 11 und nichtflüchtigem Speicher 12 angeordnet ist. Auf der Hauptplatine 9 ist das vorstehend beschriebene erfindungsgemäße Verfahren in Software implementiert. Eine mit der Hauptplatine 9 verbundene sogenannte "Backplane"-Platine 13 stellt Schnittstellen zwischen der Hauptplatine 9 und Kommunikationsmodulen 14 bereit, die in Einschübe 15 des Gehäuses 8 einschiebbar sind. Die Kommunikationsmodule 14 können für gleiche oder verschiedene Netzwerkzugangsleitungen 4 ausgestaltet sein. Beispielsweise ein Kommunikationsmodul 14 für eine DSL-Netzwerkzugangsleitung ausgestaltet sein, während ein weiteres Kommunikationsmodul 14 für eine ISDN-Netzwerkzugangsleitung und noch ein weiteres Kommunikationsmodul 14 für eine WLAN-Netzwerkzugangsleitung ausgestaltet ist. Die Kommunikationsmodule 14 weisen jeweils eine zweckmäßigerweise hotplug-fähige Steckverbindung 16 auf, um bei eingeschalteter Sendehilfsvorrichtung 5 in die Backplane-Platine 13 eingeschoben oder aus dieser entfernt zu werden.

Die Kommunikationsmodule 14 weisen geeignete Anschlußvorrichtungen 17, beispielsweise in Form von Buchsen, zur Verbindung mit einer entsprechenden Netzwerkzugangsleitung auf.

Ferner ist im Gehäuse zweckmäßigerweise eine LAN-Buchse 18 o.dgl. vorgesehen, welche mit der Hauptplatine 9 verbunden ist. Über diese LAN-Buchse 18 kann die Sendehilfsvorrichtung 5 an die Leitung 7 (Fig. 1), insbesondere ein LAN, angeschlossen werden.

Ein Datenpaket aᵢ, welches über die Leitung 7 eintrifft und über gebündelte Netzwerkzugangsleitungen 4 zur Empfangshilfsvorrichtung 6 übertragen werden soll, erreicht die Sendehilfsvorrichtung 5 über die LAN-Buchse 18 und wird auf die Hauptplatine 9 geleitet. Die Hauptplatine 9 bestätigt bereits zu diesem Zeitpunkt die noch nicht stattgefundene Ankunft des Datenpakets aᵢ beim Empfänger durch Senden eines Bestätigungspakets über die LAN-Buchse 8. Anschließend wird das Datenpaket aᵢ verschlüsselt, durch Kapselung auf das zwischen der Sendehilfsvorrichtung 5 und der Empfangshilfsvorrichtung 6 verwendete Übertragungsprotokoll des Netzwerks 3 angepasst und auf eines der Kommunikationsmodule 14 geleitet. Die Auswahl erfolgt zweckmäßigerweise unter Berücksichtigung der Bereitschaft des entsprechenden Kommunikationsmoduls 14 (Kabel angeschlossen, Netzwerkverbindung besteht) und dessen momentane Auslastung. Das Kommunikationsmodule 14 übernimmt das gekapselte Datenpaket und versendet es über die entsprechende Netzwerkzugangsleitung 4.

Die Netzwerkszugangsleitung 4 endet am Internet-Backbone des Leitungsanbieters, d.h. am Netzwerk 3. Von hier aus werden die Datenpakete Aᵢ, Bᵢ, Cᵢ wie reguläre IP-Datenpakete zur Empfangshilfsvorrichtung 6 weitergeleitet. Dort werden sie entkapselt, in eine korrekte Reihenfolge sortiert, entschlüsselt und zum ursprünglichen Datenstrom a zusammengefügt. Der ursprüngliche Datenstrom a wird dann über die LAN-Buchse der Empfangshilfsvorrichtung 6, die genauso ausgestaltet sein kann wie die Sendehilfsvorrichtung 5, über die Leitung 7' an die Empfangsvorrichtung 2 ausgegeben.

Das auf der Hauptplatine 9 ausgeführte Verfahren kann auch direkt in der Sendevorrichtung 1 und/oder der Empfangsvorrichtung 2 ausgeführt werden. Hierzu ist die Sendehilfsvorrichtung 5 und/oder die Empfangshilfsvorrichtung 6 eine Steckkarte oder eine Softwareschicht für einen PC oder Server oder dergleichen. Im Falle der Softwareschicht weist die Sendevorrichtung 1 bzw. die Empfangsvorrichtung 2 die Anschlussvorrichtungen 17 auf, z.B. direkt auf dem Motherboard oder in Form von DSL- oder WLAN-Erweiterungskarten für einen PC. Das erfindungsgemäße Verfahren wird dann als Programmschicht auf dem PC ausgeführt. In der Sendevorrichtung 1 ist es dafür als von der für TCP/IP-Übertragung separate Schicht ausgeführt, die Daten von der TCP/IP-Schicht empfängt, der TCP/IP-Schicht den Empfang der Datenpakete aᵢ bestätigt, die Datenpakete aᵢ verschlüsselt, verpackt, in wenigstens zwei Datenströme A, B aufteilt und jeweils einen der Datenströme A, B jeweils einer der Netzwerkzugangsleitungen 4 zuordnet. Gleiches gilt analog für die Empfangsvorrichtung 2, in der die Empfangshilfsvorrichtung 6 als eine von der für TCP/IP-Übertragung separate Schicht ausgeführt sein kann.

### BEZUGSZEICHENLISTE

- 1: Sendevorrichtung
- 2: Empfangsvorrichtung
- 3: Netzwerk
- 4, 4': Netzwerkzugangsleitung
- 5: Sendehilfsvorrichtung
- 6: Empfangshilfsvorrichtung
- 7, 7': Leitung
- 8: Gehäuse
- 9: Hauptplatine
- 10: Prozessor
- 11: Arbeitsspeicher
- 12: Nichtflüchtiger Speicher
- 13: Backplane-Platine
- 14: Kommunikationsmodul
- 15: Einschub
- 16: Steckverbindung
- 17: Anschlussvorrichtung
- 18: LAN-Buchse

## Patentansprüche

1. Sendehilfsvorrichtung (5) ,ausgestaltet zum Weiterleiten eines von einem Sende-Endpunkt lieferbaren, für einen über eine Empfangshilfsvorrichtung zu erreichenden Empfangs-Endpunkt bestimmten und aufeinanderfolgende Datenpakete (aᵢ) enthaltenden Eingangsdatenstroms (a) an mehrere gebündelte Netzwerkzugangsleitungen (4) unterschiedlicher physikalischer Leitungsarten, nämlich drahtlose und drahtgebundene Netzwerkzugangsleitungen, durch Verteilen der Datenpakete (aᵢ) des Eingangsdatenstroms (a) auf die Netzwerkzugangsleitungen (4), wobei die Sendehilfsvorrichtung (5) zum Einkapseln der Datenpakete (aᵢ) des Eingangsdatenstroms (a) in Datenpakete (Aᵢ, Bᵢ, Ci₎ von Ausgangsdatenströmen (A, B, C) für die Netzwerkzugangsleitungen (4) ausgestaltet ist, wobei die Sendehilfsvorrichtung zur asynchronen Bündelung dieser sich hinsichtlich Bandbreite und/oder Laufzeit unterscheidenden Netzwerkzugangsleitungen ausgestaltet ist.

2. Sendehilfsvorrichtung nach Anspruch 1, **dadurch gekennzeichnet, dass** die Sendehilfsvorrichtung (5) zum Verschlüsseln der Datenpakete (aᵢ) vor dem Einkapseln ausgestaltet ist.

3. Empfangshilfsvorrichtung (6), ausgestaltet zum Zusammensetzen von verteilt über mehrere gebündelte Netzwerkzugangsleitungen (4) unterschiedlicher physikalischer Leitungsarten, nämlich drahtlose und drahtgebundene Netzwerkzugangsleitungen, empfangbaren Datenpaketen (Aᵢ, Bᵢ, Cᵢ) zu einem entsprechenden Datenstrom (a) für einen Empfangs-Endpunkt, wobei die Empfangshilfsvorrichtung (6) zum Entkapseln der Datenpakete (Aᵢ, Bᵢ, Cᵢ) ausgestaltet ist, um entsprechende Datenpakete (aᵢ) des von einem Sende-Endpunkt stammenden und von einer Sendehilfsvorrichtung übermittelten Datenstroms (a) wiederzugewinnen, wobei die sich hinsichtlich Bandbreite und/oder Laufzeit unterscheidenden Netzwerkzugangsleitungen asynchron gebündelt sind.

4. Empfangshilfsvorrichtung nach Anspruch 3, **dadurch gekennzeichnet, dass** die Empfangshilfsvorrichtung (6) zum Zwischenspeichern der entkapselten Datenpakete (aᵢ) ausgestaltet ist

5. Empfangshilfsvorrichtung nach Anspruch 3 oder 4, **dadurch gekennzeichnet, dass** die Empfangshilfsvorrichtung (6) zum Sortieren der entkapselten Datenpakete (aᵢ) ausgestaltet ist.

6. Empfangshilfsvorrichtung nach einem der Ansprüche 3 bis 5, **dadurch gekennzeichnet, dass** die Empfangshilfsvorrichtung (6) zum Weiterleiten entkapselter Datenpakete (aᵢ) in der vom Empfangs-Endpunkt erwarteten Reihenfolge ausgestaltet ist.

7. Empfangshilfsvorrichtung nach einem der Ansprüche 3 bis 6, **dadurch gekennzeichnet, dass** die Empfangshilfsvorrichtung (6) zum Verwerfen der Empfangsbestätigungen vom Empfangs-Endpunkt ausgestaltet ist.

8. Anordnung zum Übermitteln eines Datenstroms (a) zwischen zwei Enden einer Ende-zu-Ende-Verbindung von einer Sendevorrichtung (1) an eine Empfangsvorrichtung (2) über ein Netzwerk (3) mit paketbasiertem Übertragungsprotokoll, insbesondere über das TCP/IP-basierte Internet, wobei die Sendevorrichtung (1) und die Empfangsvorrichtung (2) über Netzwerkzugangsleitungen (4, 4') unterschiedlicher physikalischer Leitungsarten, nämlich drahtlose und drahtgebundene Netzwerkzugangsleitungen, an das Netzwerk angebunden sind und sende- und/oder empfangsvorrichtungsseitig mehrere Netzwerkzugangsleitungen (4, 4') zur asynchronen Bündelung vorgesehen sind, wobei eine zwischen Sendevorrichtung (1) und Netzwerkzugangsleitung(en) (4) zwischengeschaltete Sendehilfsvorrichtung (5) nach Anspruch 1 oder 2, die zum Einkapseln von von der Sendevorrichtung (1) gesendeten Datenpaketen (aᵢ) des Datenstroms' (a) und verteilten Übertragen der gekapselten Datenpakete (Aᵢ, Bᵢ, Cᵢ) über die sich hinsichtlich Bandbreite und/oder Laufzeit unterscheidenden Netzwerkzugangsleitung(en) (4) an das Netzwerk (3) ausgestaltet ist, und eine zwischen Netzwerkzugsangsleitung(en) (4') und Empfangsvorrichtung (2) zwischengeschaltete Empfangshilfsvorrichtung (6) nach einem der Ansprüche 3 bis 7, die zum Empfangen und Entkapseln der gekapselten Datenpakete (Aᵢ, Bᵢ, Cᵢ) und zum Weiterleiten der entkapselten Datenpakete (aᵢ) in der Reihenfolge des Datenstroms (a) an die Empfangsvorrichtung (2) ausgestaltet ist, wobei die Sendehilfsvorrichtung zur asynchronen Bündelung dieser sich hinsichtlich Bandbreite und/oder Laufzeit unterscheidenden Netzwerkzugangsleitungen ausgestaltet ist.

9. Anordnung nach Anspruch 8, **dadurch gekennzeichnet, dass** die Netzwerkzugangsleitungen (4, 4') über eindeutige Adressen angesprochen werden.

10. Anordnung nach Anspruch 8 oder 9, **dadurch gekennzeichnet, dass** eine sendehilfsvorrichtungsseitige Netzwerkzugangsleitung (4) über eine Ende-zu-Ende-Verbindung mit einer empfangshilfsvorrichtungsseitigen Netzwerkzugangsleitung (4') verbunden ist.

11. Anordnung nach einem der Ansprüche 8 bis 10, **dadurch gekennzeichnet, dass** eine empfangshilfsvorrichtungsseitige Netzwerkzugangsleitung (4') vorgesehen ist.

12. Verfahren zum Übermitteln eines Datenstroms (a) zwischen zwei Enden einer Ende-zu-Ende-Verbindung von einer Sendevorrichtung (1) an eine Empfangsvorrichtung (2) über ein Netzwerk (3) mit paketbasiertem Übertragungsprotokoll, insbesondere über das TCP/IP-basierte Internet, mittels der Anordnung nach einem der Ansprüche 8 bis 10, wobei die Sendevorrichtung (1) mittels einer Sendehilfsvorrichtung (5) und die Empfangsvorrichtung (2) mittels einer Empfangshilfsvorrichtung (6) über Netzwerkzugangsleitungen (4, 4') unterschiedlicher physikalischer Leitungsarten, nämlich drahtlose und drahtgebundene Netzwerkzugangsleitungen, an das Netzwerk angebunden sind und sende- und/oder empfangsvorrichtungsseitig mehrere dieser sich hinsichtlich Bandbreite und/oder Laufzeit unterscheidenden Netzwerkzugangsleitungen (4, 4') zur asynchronen Bündelung vorgesehen sind, wobei von der Sendevorrichtung (1) gesendete Datenpaketen (aₗ) des Datenstroms (a) eingekapselt und die gekapselten Datenpakete (Aᵢ, Bᵢ, Cᵢ) verteilt über die Netzwerkzugangsleitung(en) (4) an das Netzwerk (3) übermittelt und über die Netzwerk-zugsangsleitung(en) (4') aus dem Netzwerk (3) entnommen, entkapselt und in der Reihenfolge des Datenstroms (a) an die Empfangsvorrichtung (2) weitergeleitet werden.

13. Verfahren Anspruch 12, **dadurch gekennzeichnet, dass** die Netzwerkzugangsleitungen (4, 4') über eindeutige Adressen angesprochen werden.

14. Verfahren nach Anspruch 12 oder 13, **dadurch gekennzeichnet, dass** eine sendehilfsvorrichtungsseitige Netzwerkzugangsleitung (4) über eine Ende-zu-Ende-Verbindung mit einer empfangshilfsvorrichtungsseitigen Netzwerkzugangsleitung (4') verbunden wird.

15. Verfahren nach einem der Ansprüche 12 bis 14, **dadurch gekennzeichnet, dass** die Datenpakete (aᵢ) des eingehenden Datenstroms (a) auf ausgehende Datenströme (A, B, C) verteilt werden und jedem ausgehenden Datenstrom (A, B, C) genau eine der Netzwerkzugangsleitungen (4) zugeordnet ist.

16. Verfahren nach Anspruch 15, **dadurch gekennzeichnet, dass** ein Datenstrom (A), dessen Netzwerkzugangsleitung (4) zu einem Zeitpunkt mehr Bandbreite aufweist als die Netzwerkzugangsleitung (4) eines anderen Datenstroms (B), zu diesem Zeitpunkt mehr Datenpakete (Aᵢ) erhält als der andere Datenstrom (B).

17. Verfahren nach einem der Ansprüche 12 bis 16, **dadurch gekennzeichnet, dass** bei Zusammenbruch einer Netzwerkzugangsleitung (4, 4') die Sendehilfsvorrichtung (5) die verlorengegangene Datenpakete erneut über eine andere der Netzwerkzugangsleitungen (4) an die Empfangshilfsvorrichtung (6) übermittelt.

18. Sendeverfahren für eine Sendehilfsvorrichtung nach Anspruch 1 oder 2, zum Weiterleiten eines von einem Sende-Endpunkt an einen Empfangs-Endpunkt über eine Empfangshilfsvorrichtung lieferbaren und aufeinanderfolgende Datenpakete (aᵢ) enthaltenden Eingangsdatenstroms (a) an mehrere Netzwerkzugangsleitungen (4) unterschiedlicher physikalischer Leitungsarten, nämlich drahtlose und drahtgebundene Netzwerkzugangsleitungen, durch Verteilen der Datenpakete (aᵢ) des Eingangsdatenstroms (a) auf die Netzwerkzugangsleitungen (4), wobei die Datenpakete (aᵢ) des Eingangsdatenstroms (a) in Datenpakete (Aᵢ, Bᵢ, Cᵢ) eingekapselt werden, die als Ausgangsdatenströme (A, B, C) verteilt an die Netzwerkzugangsleitungen (4) weitergeleitet werden, wobei mehrere dieser sich hinsichtlich Bandbreite und/oder Laufzeit unterscheidenden Netzwerkzugangsleitungen asynchron gebündelt werden.

19. Sendeverfahren nach Anspruch 18, **dadurch gekennzeichnet, dass** eine Empfangsbestätigung, die den Empfang eines Datenpakets (aᵢ) durch den Empfangs-Endpunkt signalisiert, vor Weiterleiten des entsprechenden gekapselten Datenpakets erzeugt wird.

20. Sendeverfahren nach Anspruch 18 oder 19, **dadurch gekennzeichnet, dass** die Datenpakete (aᵢ) vor dem Einkapseln verschlüsselt werden.

21. Empfangsverfahren für eine Empfangshilfsvorrichtung nach einem der Ansprüche 3 bis 7, zum Zusammensetzen von verteilt über mehrere gebündelte Netzwerkzugangsleitungen (4) unterschiedlicher physikalischer Leitungsarten, nämlich drahtlose und drahtgebundene Netzwerkzugangsleitungen, empfangbaren Datenpaketen (Aᵢ, Bᵢ, Cᵢ) zu einem entsprechenden Datenstrom (a) für einen Empfangs-Endpunkt, wobei die Datenpakete (Aᵢ, Bᵢ, Cᵢ) entkapselt werden, um entsprechende Datenpakete (aᵢ) des von einem Sende-Endpunkt stammenden und von einer Sendehilfsvorrichtung übermittelten Datenstroms (a) wiederzugewinnen, wobei mehrere dieser sich hinsichtlich Bandbreite und/oder Laufzeit unterscheidenden Netzwerkzugangsleitungen asynchron gebündelt werden.

22. Empfangsverfahren nach Anspruch 21, **dadurch gekennzeichnet, dass** die entkapselten Datenpakete (aᵢ) zwischengespeichert und sortiert werden.

23. Empfangsverfahren nach Anspruch 21 oder 22, **dadurch gekennzeichnet, dass** die entkapselten Datenpakete (aᵢ) in der vom Empfangs-Endpunkt erwarteten Reihenfolge weitergeleitet werden.

24. Empfangsverfahren nach einem der Ansprüche 21 bis 23, **dadurch gekennzeichnet, dass** Empfangsbestätigungen vom Empfangs-Endpunkt nicht an den Sende-Endpunkt weitergeleitet werden.

25. Computerprogrammprodukt, umfassend Befehle, die bei der Ausführung des Verfahrens durch einen Computer bewirken, dass der Computer das Verfahren nach einem der Ansprüche 12 bis 24 ausführt.

## Claims

1. A transmission auxiliary device (5) designed for forwarding an input data stream (a), which can be supplied from a transmission end point, is intended for a reception end point to be reached via a reception auxiliary device and contains successive data packets (aᵢ), to a plurality of bundled network access lines (4) of different physical line types, namely wireless and wired network access lines, by distributing the data packets (aᵢ) of the input data stream (a) to the network access lines (4), wherein the transmission auxiliary device (5) is designed for encapsulating the data packets (aᵢ) of the input data stream (a) into data packets (Aᵢ, Bᵢ, Cᵢ) of output data streams (A, B, C) for the network access lines (4), the transmission auxiliary device being designed for asynchronous bundling of these network access lines which differ in terms of bandwidth and/or delay.

2. Transmission auxiliary device according to claim 1, **characterized in that** the transmission auxiliary device (5) is designed for encrypting the data packets (aᵢ) before encapsulation.

3. Auxiliary receiving device (6) designed for assembling data packets (Aᵢ, Bᵢ, Cᵢ ) which can be received in a distributed manner via a plurality of bundled network access lines (4) of different physical line types, namely wireless and wired network access lines, into a corresponding data stream (a) for a receiving endpoint, wherein the receiving auxiliary device (6) is designed to decapsulate the data packets (Aᵢ, Bᵢ, Cᵢ) in order to recover corresponding data packets (aᵢ) of the data stream (a) originating from a transmitting endpoint and transmitted by a transmitting auxiliary device, wherein the network access lines differing in bandwidth and/or delay are asynchronously bundled.

4. Auxiliary receiving device according to claim 3, **characterized in that** the auxiliary receiving device (6) is designed for buffering the decapsulated data packets (aᵢ)

5. Auxiliary receiving device according to claim 3 or 4, **characterized in that** the auxiliary receiving device (6) is designed for sorting the decapsulated data packets (aᵢ).

6. Receiving auxiliary device according to one of claims 3 to 5, **characterized in that** the receiving auxiliary device (6) is designed to forward decapsulated data packets (aᵢ) in the order expected by the receiving endpoint.

7. A receiving auxiliary device according to any one of claims 3 to 6, **characterized in that** the receiving auxiliary device (6) is configured to discard the receiving acknowledgements from the receiving endpoint.

8. Arrangement for transmitting a data stream (a) between two ends of an end-to-end connection from a transmitting device (1) to a receiving device (2) via a network (3) with a packet-based transmission protocol, in particular via the TCP/IP-based Internet, wherein the transmitting device (1) and the receiving device (2) are connected to the network via network access lines (4, 4') of different physical line types, namely wireless and wired network access lines, and a plurality of network access lines (4, 4') are provided on the transmitting and/or receiving device side for asynchronous bundling, wherein a transmission auxiliary device (5) according to claim 1 or 2 is interposed between the transmitting device (1) and the network access line(s) (4), which is provided for encapsulating data packets (aᵢ) of the data stream (a) transmitted by the transmitting device (1) and for distributed transmission of the encapsulated data packets (Aᵢ, Bᵢ, Cᵢ) to the network (3) via the network access line(s) (4) differing in bandwidth and/or delay, and a receiving auxiliary device (6) interposed between the network access line(s) (4') and the receiving device (2) according to one of claims 3 to 7, which is designed to receive and decapsulate the encapsulated data packets (Aᵢ, Bᵢ, Cᵢ) and to forward the decapsulated data packets (aᵢ) in the order of the data stream (a) to the receiving device (2), the transmission auxiliary device being designed for asynchronous bundling of these network access lines which differ in terms of bandwidth and/or delay.

9. Arrangement according to claim 8, **characterized in that** the network access lines (4, 4') are addressed via unique addresses.

10. Arrangement according to claim 8 or 9, **characterized in that** a network access line (4) on the transmitting-aid device side is connected to a network access line (4') on the receiving-aid device side via an end-to-end connection.

11. Arrangement according to one of claims 8 to 10, **characterized in that** a network access line (4') is provided on the receiving device side.

12. Method for transmitting a data stream (a) between two ends of an end-to-end connection from a transmitting device (1) to a receiving device (2) via a network (3) with packet-based transmission protocol, in particular via the TCP/IP-based Internet, by means of the arrangement according to one of claims 8 to 10, wherein the transmitting device (1) is connected to the network by means of a transmitting auxiliary device (5) and the receiving device (2) is connected to the network by means of a receiving auxiliary device (6) via network access lines (4, 4') of different physical line types, namely wireless and wired network access lines, and a plurality of these network access lines (4, 4'), which differ in terms of bandwidth and/or transit time, are provided on the transmitting and/or receiving device side for asynchronous bundling, wherein data packets (aᵢ) of the data stream (a) transmitted by the transmitting device (1) are encapsulated and the encapsulated data packets (Aᵢ, Bᵢ, Cᵢ) are transmitted to the network (3) in a distributed manner via the network access line(s) (4) and are retrieved from the network (3) via the network access line(s) (4'), decapsulated and forwarded to the receiving device (2) in the sequence of the data stream (a).

13. Method claim 12, **characterized in that** the network access lines (4, 4') are addressed via unique addresses.

14. Method according to claim 12 or 13, **characterized in that** a network access line (4) on the transmitting-aid device side is connected to a network access line (4') on the receiving-aid device side via an end-to-end connection.

15. Method according to one of claims 12 to 14, **characterized in that** the data packets (aᵢ) of the incoming data stream (a) are distributed to outgoing data streams (A, B, C) and exactly one of the network access lines (4) is assigned to each outgoing data stream (A, B, C).

16. Method according to claim 15, **characterized in that** a data stream (A) whose network access line (4) has more bandwidth at a point in time than the network access line (4) of another data stream (B) receives more data packets (Aᵢ) at this point in time than the other data stream (B).

17. Method according to any one of claims 12 to 16, **characterized in that** when a network access line (4, 4') breaks down, the transmitting auxiliary device (5) retransmits the lost data packets to the receiving auxiliary device (6) via another one of the network access lines (4).

18. A transmission method for a transmission auxiliary device according to claim 1 or 2, for forwarding an input data stream (a) deliverable from a transmission endpoint to a reception endpoint via a reception auxiliary device and comprising successive data packets (aᵢ) to a plurality of network access lines (4) of different physical line types, namely wireless and wired network access lines, by distributing the data packets (aᵢ) of the input data stream (a) to the network access lines (4), wherein the data packets (aᵢ) of the input data stream (a) are encapsulated into data packets (Aᵢ, Bᵢ, Cᵢ) which are forwarded as output data streams (A, B, C) distributed to the network access lines (4), wherein several of these network access lines differing in bandwidth and/or propagation time are bundled asynchronously.

19. The transmission method according to claim 18, **characterized in that** a receipt acknowledgement signaling the receipt of a data packet (aᵢ) by the receiving endpoint is generated before forwarding the corresponding encapsulated data packet.

20. Transmission method according to claim 18 or 19, **characterized in that** the data packets (aᵢ) are encrypted before encapsulation.

21. A receiving method for a receiving auxiliary device according to any one of claims 3 to 7, for assembling data packets (Aᵢ, Bᵢ, Cᵢ) receivable in a distributed manner over a plurality of bundled network access lines (4) of different physical line types, namely wireless and wired network access lines, into a corresponding data stream (a) for a receiving endpoint, wherein the data packets (Aᵢ, Bᵢ, Cᵢ) are decapsulated to recover corresponding data packets (aᵢ) of the data stream (a) originating from a transmitting endpoint and transmitted by a transmitting auxiliary device, wherein a plurality of said network access lines differing in bandwidth and/or transmission time are asynchronously bundled.

22. Receiving method according to claim 21, **characterized in that** the decapsulated data packets (aᵢ) are temporarily stored and sorted.

23. Receiving method according to claim 21 or 22, **characterized in that** the decapsulated data packets (aᵢ) are forwarded in the order expected by the receiving endpoint.

24. A receiving method according to any one of claims 21 to 23, **characterized in that** acknowledgements of receipt from the receiving endpoint are not forwarded to the transmitting endpoint.

25. A computer program product comprising instructions which, when the method is executed by a computer, cause the computer to execute the method of any one of claims 12 to 24

## Revendications

1. Dispositif auxiliaire d'émission (5), conçu pour transmettre un flux de données d'entrée (a), pouvant être fourni par un point final d'émission, destiné à un point final de réception à atteindre par l'intermédiaire d'un dispositif auxiliaire de réception et contenant des paquets de données (aᵢ) successifs, à plusieurs lignes d'accès au réseau (4) regroupées de différents types de lignes physiques, à savoir des lignes d'accès au réseau sans fil et filaires, en répartissant les paquets de données (aᵢ) du flux de données d'entrée (a) sur les lignes d'accès au réseau (4), le dispositif auxiliaire d'émission (5) étant destiné à encapsuler les paquets de données (aᵢ) du flux de données d'entrée (a) en paquets de données (Aᵢ, Bᵢ, Cᵢ) de flux de données de sortie (A, B, C) pour les lignes d'accès au réseau (4), le dispositif auxiliaire d'émission étant conçu pour le regroupement asynchrone de ces lignes d'accès au réseau qui se distinguent en termes de largeur de bande et/ou de temps de propagation.

2. Dispositif d'aide à la transmission selon la revendication 1, **caractérisé en ce que** le dispositif d'aide à la transmission (5) est configuré pour crypter les paquets de données (aᵢ) avant de les encapsuler.

3. Dispositif auxiliaire de réception (6), conçu pour assembler des paquets de données (Aᵢ, Bᵢ, Cᵢ) pouvant être reçus de manière répartie via plusieurs lignes d'accès au réseau (4) regroupées de différents types de lignes physiques, à savoir des lignes d'accès au réseau sans fil et filaires, en un flux de données (a) correspondant pour un point final de réception, le dispositif auxiliaire de réception (6) étant conçu pour décapsuler les paquets de données (Aᵢ, Bᵢ, Cᵢ) afin de récupérer des paquets de données correspondants (aᵢ) du flux de données (a) provenant d'un point terminal d'émission et transmis par un dispositif auxiliaire d'émission, les lignes d'accès au réseau se différenciant en termes de largeur de bande et/ou de temps de propagation étant regroupées de manière asynchrone.

4. Dispositif d'aide à la réception selon la revendication 3, **caractérisé en ce que** le dispositif d'aide à la réception (6) est conçu pour stocker temporairement les paquets de données décapsulés (aᵢ).

5. Dispositif d'aide à la réception selon la revendication 3 ou 4, **caractérisé en ce que** le dispositif d'aide à la réception (6) est configuré pour trier les paquets de données décapsulés (aᵢ).

6. Dispositif d'aide à la réception selon l'une des revendications 3 à 5, **caractérisé en ce que** le dispositif d'aide à la réception (6) est configuré pour retransmettre des paquets de données décapsulés (aᵢ) dans l'ordre attendu par le point final de réception.

7. Dispositif d'aide à la réception selon l'une des revendications 3 à 6, **caractérisé en ce que** le dispositif d'aide à la réception (6) est configuré pour rejeter les accusés de réception provenant du point final de réception.

8. Dispositif de transmission d'un flux de données (a) entre deux extrémités d'une liaison de bout en bout d'un dispositif d'émission (1) à un dispositif de réception (2) par l'intermédiaire d'un réseau (3) avec un protocole de transmission basé sur des paquets, en particulier par l'intermédiaire de l'Internet basé sur TCP/IP, le dispositif d'émission (1) et le dispositif de réception (2) étant reliés par des lignes d'accès au réseau (4, 4') de différents types de lignes physiques, à savoir des lignes d'accès au réseau sans fil et des lignes d'accès au réseau filaires, sont reliés au réseau et plusieurs lignes d'accès au réseau (4, 4') sont prévues du côté du dispositif d'émission et/ou de réception pour le regroupement asynchrone, un dispositif auxiliaire d'émission (5) selon la revendication 1 ou 2, intercalé entre le dispositif d'émission (1) et la ou les lignes d'accès au réseau (4), qui est destiné à encapsuler des paquets de données (aᵢ) du flux de données (a) envoyés par le dispositif d'émission (1) et à transmettre de manière répartie les paquets de données encapsulés (Aᵢ, Bᵢ, Cᵢ) au réseau (3) par l'intermédiaire de la ou des lignes d'accès au réseau (4) qui diffèrent en termes de largeur de bande et/ou de temps de propagation, et un dispositif auxiliaire de réception (6) selon l'une des revendications 3 à 7, intercalé entre la ou les lignes d'accès au réseau (4') et le dispositif de réception (2), qui est conçu pour recevoir et désencapsuler les paquets de données encapsulés (Aᵢ, Bᵢ, Cᵢ) et pour transmettre les paquets de données désencapsulés (aᵢ) dans l'ordre du flux de données (a) au dispositif de réception (2), le dispositif auxiliaire d'émission étant conçu pour le regroupement asynchrone de ces lignes d'accès au réseau qui se distinguent en termes de largeur de bande et/ou de temps de propagation.

9. Dispositif selon la revendication 8, **caractérisé en ce que** les lignes d'accès au réseau (4, 4') sont adressées par des adresses uniques.

10. Dispositif selon la revendication 8 ou 9, **caractérisé en ce qu'**une ligne d'accès au réseau (4) côté dispositif d'aide à l'émission est reliée à une ligne d'accès au réseau (4') côté dispositif d'aide à la réception par une connexion de bout en bout.

11. Dispositif selon l'une des revendications 8 à 10, **caractérisé en ce qu'**il est prévu une ligne d'accès au réseau (4') côté dispositif auxiliaire de réception.

12. Procédé de transmission d'un flux de données (a) entre deux extrémités d'une connexion de bout en bout d'un dispositif émetteur (1) à un dispositif récepteur (2) via un réseau (3) avec un protocole de transmission basé sur des paquets, en particulier via l'Internet basé sur TCP/IP, au moyen de l'agencement selon l'une des revendications 8 à 10, dans lequel le dispositif d'émission (1) est connecté au moyen d'un dispositif auxiliaire d'émission (5) et le dispositif de réception (2) est connecté au moyen d'un dispositif auxiliaire de réception (6) par l'intermédiaire de lignes d'accès au réseau (4, 4') de différents types de lignes physiques, à savoir des lignes d'accès au réseau sans fil et filaires, sont reliés au réseau et, du côté du dispositif d'émission et/ou de réception, plusieurs de ces lignes d'accès au réseau (4, 4') qui se distinguent en termes de largeur de bande et/ou de temps de propagation sont prévues pour le regroupement asynchrone, des paquets de données (aᵢ) du flux de données (a) émis par le dispositif d'émission (1) étant encapsulés et les paquets de données encapsulés (Aᵢ, Bᵢ, Cᵢ) sont transmis au réseau (3) de manière répartie par l'intermédiaire de la ou des lignes d'accès au réseau (4) et sont prélevés du réseau (3) par l'intermédiaire de la ou des lignes d'accès au réseau (4'), sont décapsulés et sont retransmis au dispositif de réception (2) dans l'ordre du flux de données (a).

13. Procédé revendication 12, **caractérisé en ce que** les lignes d'accès au réseau (4, 4') sont adressées par des adresses uniques.

14. Procédé selon la revendication 12 ou 13, **caractérisé en ce qu'**une ligne d'accès au réseau (4) côté dispositif d'aide à l'émission est connectée à une ligne d'accès au réseau (4') côté dispositif d'aide à la réception par une connexion de bout en bout.

15. Procédé selon l'une des revendications 12 à 14, **caractérisé en ce que** les paquets de données (aᵢ) du flux de données entrant (a) sont répartis sur des flux de données sortants (A, B, C) et **en ce qu'**à chaque flux de données sortant (A, B, C) est associée exactement une des lignes d'accès au réseau (4).

16. Procédé selon la revendication 15, **caractérisé en ce qu'**un flux de données (A) dont la ligne d'accès au réseau (4) présente à un moment donné plus de largeur de bande que la ligne d'accès au réseau (4) d'un autre flux de données (B), reçoit à ce moment-là plus de paquets de données (Aᵢ) que l'autre flux de données (B).

17. Procédé selon l'une quelconque des revendications 12 à 16, **caractérisé en ce que**, en cas d'effondrement d'une ligne d'accès au réseau (4, 4'), le dispositif d'aide à l'émission (5) transmet à nouveau les paquets de données perdus au dispositif d'aide à la réception (6) via une autre des lignes d'accès au réseau (4).

18. Procédé d'émission pour un dispositif auxiliaire d'émission selon la revendication 1 ou 2, pour transmettre un flux de données d'entrée (a), pouvant être fourni par un point final d'émission à un point final de réception par l'intermédiaire d'un dispositif auxiliaire de réception et contenant des paquets de données (aᵢ) successifs, à plusieurs lignes d'accès au réseau (4) de différents types de lignes physiques, à savoir des lignes d'accès au réseau sans fil et filaires, en répartissant les paquets de données (aᵢ) du flux de données d'entrée (a) sur les lignes d'accès au réseau (4), les paquets de données (aᵢ) du flux de données d'entrée (a) étant encapsulés dans des paquets de données (Aᵢ, Bᵢ, Cᵢ) qui sont transmis aux lignes d'accès au réseau (4) en étant répartis en tant que flux de données de sortie (A, B, C), plusieurs de ces lignes d'accès au réseau qui se différencient en termes de largeur de bande et/ou de temps de propagation étant regroupées de manière asynchrone.

19. Procédé de transmission selon la revendication 18, **caractérisé en ce qu'**un accusé de réception signalant la réception d'un paquet de données (aᵢ) par le point d'extrémité de réception est généré avant de retransmettre le paquet de données encapsulé correspondant.

20. Procédé d'émission selon la revendication 18 ou 19, **caractérisé en ce que** les paquets de données (aᵢ) sont cryptés avant d'être encapsulés.

21. Procédé de réception pour un dispositif auxiliaire de réception selon l'une des revendications 3 à 7, pour assembler des paquets de données (Aᵢ, Bᵢ, Cᵢ) pouvant être reçus de manière répartie sur plusieurs lignes d'accès au réseau (4) regroupées de différents types de lignes physiques, à savoir des lignes d'accès au réseau sans fil et des lignes d'accès au réseau filaires, en un flux de données (a) correspondant pour un point terminal de réception, les paquets de données (Aᵢ, Bᵢ, Cᵢ) étant décapsulés pour récupérer des paquets de données correspondants (aᵢ) du flux de données (a) provenant d'un point terminal d'émission et transmis par un dispositif auxiliaire d'émission, plusieurs de ces lignes d'accès au réseau, qui diffèrent en termes de largeur de bande et/ou de temps de propagation, étant regroupées de manière asynchrone.

22. Procédé de réception selon la revendication 21, **caractérisé en ce que** les paquets de données décapsulés (aᵢ) sont stockés temporairement et triés.

23. Procédé de réception selon la revendication 21 ou 22, **caractérisé en ce que** les paquets de données décapsulés (aᵢ) sont retransmis dans l'ordre attendu par le point final de réception.

24. Procédé de réception selon l'une quelconque des revendications 21 à 23, **caractérisé en ce que** les accusés de réception ne sont pas retransmis du point terminal de réception au point terminal d'émission.

25. Produit programme d'ordinateur comprenant des instructions qui, lorsque le procédé est exécuté par un ordinateur, amènent l'ordinateur à exécuter le procédé selon l'une quelconque des revendications 12 à 24.
